(19) **Europäisches Patentamt**
**European Patent Office**
**Office européen des brevets**

(11) **EP 4 607 411 A1**

(12) **EUROPEAN PATENT APPLICATION**

(43) Date of publication:
**27.08.2025 Bulletin 2025/35**

(21) Application number: **24158568.6**

(22) Date of filing: **20.02.2024**

(51) International Patent Classification (IPC):
**G06N 10/20** (2022.01)    **G06N 10/40** (2022.01)
**G06N 10/60** (2022.01)

(52) Cooperative Patent Classification (CPC):
**G06N 10/20; G06N 10/40; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Kipu Quantum GmbH
76137 Karlsruhe (DE)**

(72) Inventors:
• **KUMAR, Shubham
834002 Ranchi (IN)**
• **HEGADE, Narendra
560099 Karnataka (IN)**
• **SOLANO, Enrique
10405 Berlin (DE)**

(74) Representative: **Sonnenberg Harrison
Partnerschaft mbB
Herzogspitalstraße 10a
80331 München (DE)**

(54) **DIGITAL-ANALOG COUNTERDIABATIC QUANTUM ALGORITHM (DACQA)**

(57) The invention pertains to a computer-implemented method for solving a QUBO or HUBO optimization problem in a trapped ion quantum computer using a Digital-Analog Counterdiabatic Quantum Optimization operation in a multi-qubit system.

According to the invention, the method comprises, by using a central processing unit (CPU):
- receiving a problem Hamiltonian being defined based on the multi-qubit system and indicative of at least one first pair of interconnected qubits in the multi-qubit system, the problem Hamiltonian encodes the optimization problem and is indicative of at least one second pair of interconnected qubits in the multi-qubit system
- based on the problem Hamiltonian, realizing the multi-local terms using analog blocks and
- obtaining an optimal quantum circuit for performing the DAQC operation, the optimal quantum circuit comprising the optimal configuration of analog and digital blocks based on hardware restrictions, and
- providing an optimal quantum circuit to a quantum processing unit (QPU).

**EP 4 607 411 A1**

**Description**

The invention relates to quantum computing. Certain embodiments of the invention are defined by the appended independent and dependent claims.

The invention also relates to a computer-implemented method to perform digital-analog quantum computing (DAQC) in trapped ion quantum computers for solving optimization problems via counterdiabatic driving. In particular embodiments, the method is based on Digital-Analog quantum computing (DAQC) along with counterdiabatic driving (CD).

**Short Description of the Invention**

This summary is provided to introduce a selection of concepts in a simplified form that are further described below in the detailed description. This summary is not intended to identify key features of the invention, nor is it intended to be used to limit the scope of the invention.

Quantum computing: It is a field of computation, which aims at outperforming classical computation by exploiting quantum mechanical phenomena. In this regard, it is necessary to introduce a qubit, which is a basic unit of quantum information.

Qubit: The qubit may be considered as the quantum analog of a classical bit. It is representative of a physical system that may be in two different states, generally denoted by 10) and 11), as well as in a superposition of those two states, e.g., $\frac{|0\rangle + |1\rangle}{\sqrt{2}}$. This plays an important role in the development of quantum algorithms outperforming classical algorithms. One example of the physical device that may be used as a qubit is an electron spin.

Unitary operation: The time evolution of qubits is specified by a unitary operator acting on qubit states. The unitary operator plays the role of a gate in the quantum computing. In general, these gates are generated via some Hamiltonian that makes a qubit system to evolve in time.

Quantum circuit: A quantum circuit is a model for quantum computation in which a computation is a sequence of quantum gates, which are reversible transformations on a quantum mechanical analog of an n-bit register. This register consists of n qubits.

Circuit depth: It is defined as the number of parallel unitary operations that can be performed for a given algorithm to run on a given quantum hardware.

Coherence time: It is the duration over which a quantum system, such as a qubit in a quantum computer, maintains its quantum state without significant decoherence. Decoherence is the process by which a quantum system loses its quantum mechanical properties, typically due to interactions with its external environment, leading to the loss of superposition and entanglement. Coherence time sets a limit on the time available to perform quantum operations or computations before the quantum information is degraded.

Trapped ion quantum computers: Trapped ions are a leading technology in the field of quantum computing, distinguished by their high-fidelity operations and long coherence times. This technology utilizes ions-atoms that have been ionized by adding or removing electrons confined and suspended in free space using electromagnetic fields. These trapped ions serve as qubits, the fundamental units of quantum information, in a quantum computer.

Hamiltonian and k-local terms: A Hamiltonian is an operator representing the total energy of a quantum system, essential for describing the system's evolution over time. Particularly relevant are k-local Hamiltonians, where each term in the Hamiltonian involves interactions among at most k qubits. This concept is crucial in the realm of quantum simulations and algorithms, as it realistically models physical systems which typically exhibit local interactions. For instance, a 2-local Hamiltonian includes terms that describe interactions between pairs of qubits but not three or more simultaneously.

Quantum gate: A quantum gate is a fixed unitary evolution. An example is a multi-qubit operation:

$$U_N = e^{i\pi/4}\sigma_1^z \sigma_2^z \qquad (1).$$

Analog block:

An analog block is a parametrized entangling unitary evolution with more than one parameter. An example is a two-parameter-dependent multiqubit operation in trapped ions (global MS gate) as

$$U_{MS}^n(\theta, \phi) = e^{-i\frac{\theta}{4}\left(cos\phi\, S_x + sin\phi\, S_y\right)^2} \qquad (3).$$

Where $S_{x(y)} = \sum_i \sigma_i^{x(y)}$

Digital block:

A digital block is a fixed unitary evolution up to a set of local rotations upto 2-qubits. The examples are parameter-fixed entangling quantum gates and single qubit rotations with arbitrary angles as

$$U_N(\phi) = \left(e^{i\phi_1 \sigma_1^z} \otimes e^{i\phi_2 \sigma_2^z}\right) e^{i\pi/4 \sigma_1^z \sigma_2^z}, \text{ and} \qquad (2).$$

$$U_i(\phi) = e^{i\phi \sigma_1^z}.$$

$$U_{MS}^2(\theta, 0) = e^{-i\theta/4 \sigma_1^x \sigma_2^x}.$$

In embodiments of this invention, the analog block is used as the global MS gate available in trapped ion quantum computers and defined as $U_{MS}^n(\theta, \phi)$, and the digital block as the one-parameter dependent 2-qubit MS gates $U_{MS}^2(\theta, 0)$ and the single qubit rotations.

Problem Hamiltonian: The problem Hamiltonian (also referred to here as target Hamiltonian) is the Hamiltonian that needs to be mapped to the quantum computer or simulator and simulated using DACQO algorithm.

Global Mølmer-Sørensen (MS) gate: It is a quantum gate incorporating both XX and YY interactions across multiple qubits and is a powerful and sophisticated tool in the field of quantum computing, particularly within trapped ion quantum computers. This gate is defined by the unitary operator $U_{MS}^n(\theta, \phi) = e^{-i\frac{\theta}{4}(cos\phi\, S_x + sin\phi\, S_y)^2}$ where $S_x, S_y = \sum_{i=1}^{n} \sigma_{x,y}^i$ and $n$ is the number of ions. The key feature of this gate is the summation over all qubits, leading to a complex entanglement pattern as it induces not just individual XX and YY interactions, but also cross terms involving different qubits. The squaring of the summed terms significantly enhances the gate's capability to create elaborate multipartite entangled states, crucial for advanced quantum algorithms and simulations.

Trotterization: It is a technique used in quantum computing to simulate the evolution of quantum systems governed by Hamiltonians that are sums of non-commuting terms. It breaks down the exponential of a sum of operators into a product of exponentials of these operators, as $e^{(A+B)t} \approx \left(e^{\frac{At}{n}} e^{\frac{Bt}{n}}\right)^n$, allowing for an approximate simulation of the quantum system's dynamics. Here, $A$ and $B$ are, generally, non-commuting operators, $t$ represents time, and $n$ is the number of subdivisions or steps in the approximation. As $n$ approaches infinity, this approximation becomes exact. This method is based on the Trotter-Suzuki formula, which provides a way to approximate the evolution operator of the entire system through a sequence of simpler operations that are easier to implement on a quantum computer.

Methods of quantum computing: Among the approaches to do quantum computing, there are mainly two, analog and digital methods. The analog method aims to design the hardware to mimic a certain problem (Hamiltonian). While being high in accuracy, it has the disadvantage that it is specific to a given problem and lacks flexibility. In digital quantum computation (DQC), the digital quantum gates (single and two-qubit) are used to tune the hardware to reach a certain target Hamiltonian.

An alternative approach is Digital-Analog Quantum Computing (DAQC), which uses single and two qubit gates as digital blocks and multi-qubit gates as analog blocks aiming to solve the problem with fewer resources (reduced circuit depth) than is required by DQC. Moreover, due to reduced circuit depth it incurs less error in the simulation compared to the DQC paradigm and is more accurate.

Noisy intermediated scale (NISQ) devices: It refers to the current generation of quantum computers that are characterized by their relatively small number of qubits and the presence of noise and errors in their operations.

Optimization problem: Optimization problems are central to many scientific, engineering, and economic applications and fall under a broad category of mathematical problems where the goal is to find the optimal solution from a set of available alternatives. The optimal solution is determined according to specific criteria, typically defined by an objective function that needs to be maximized or minimized. The computational complexity of finding optimal solutions in optimization problems are categorized into polynomial time (P), where the solution time scales polynomially with input size, or NP hard, that exhibit a solution time that can grow exponentially with the problem size, making them computationally challenging, especially for large-scale instances. Quantum computing aims to address this complexity.

<u>QUBO problem</u>: QUBO problems are a type of optimization problem and have a broad range of applications in various fields like machine learning, finance, and logistics. In a QUBO problem, one seeks to minimize a quadratic objective function of binary variables (variables that can take values of 0 or 1). The objective function is a sum of terms, each involving either a single variable or a product of two variables. These problems are unconstrained, meaning there are no explicit constraints on the variables apart from their binary nature.

<u>HUBO problem</u>: Higher order unconstrained binary optimization (HUBO) problems involve optimizing polynomial functions of binary variables without explicit constraints. These problems are crucial in various fields, including operations research and physics. Solving HUBO problems requires advanced algorithms, with quantum computing offering promising new solutions. Quantum techniques exploit unique quantum properties to solve HUBO problems more efficiently than classical methods.

<u>Ising spin glass Hamiltonian:</u> The Ising spin glass model describes system of spins that can interact with each other in a complex manner. In this model, spins are represented by variables that can take values of +1 or -1, typically denoting their 'up' or 'down' states. The model is defined on a lattice (or graph) where spins are placed on vertices and interactions between spins are represented by edges. These interactions can be ferromagnetic or antiferromagnetic, leading to complex energy landscapes. The energy of a spin configuration in the Ising model is given by a Hamiltonian, which is a function of the spin states and their interactions. The goal often involves finding the ground state of this Hamiltonian, which corresponds to the minimum energy configuration.

<u>Problem encoding:</u> Encoding a problem in quantum computing refers to the process of translating a specific computational problem or algorithm into a form that is suitable for a quantum computer to execute. For example, the QUBO problem can be encoded into the Ising spin glass Hamiltonian.

<u>Adiabatic Quantum Computing (AQC):</u> is a quantum computing methodology that leverages the adiabatic theorem of quantum mechanics. It starts with a quantum system in an easily identifiable ground state and then slowly evolves this system according to a changing Hamiltonian, a process known as adiabatic evolution. The final Hamiltonian of this evolution is designed such that its ground state encodes the solution to the computational problem of interest. AQC's strength lies in its robustness against certain types of errors and decoherence, as the system ideally remains in its lowest energy state throughout the computation. This approach is particularly effective for solving optimization problems and is closely related to quantum annealing. However, maintaining adiabaticity throughout the computation, especially for complex problems, poses a significant challenge, as it often requires exceedingly slow evolution to prevent transitions to higher energy states.

<u>Counterdiabatic quantum computing:</u> Counterdiabatic quantum computing (CDQC) is a concept in quantum computing that aims to improve the efficiency and fidelity of quantum computations, particularly in the context of adiabatic quantum computing (AQC). Counterdiabatic (CD) driving, also known as transitionless quantum driving, is a technique used to speed up adiabatic processes without causing non-adiabatic transitions. It involves adding an auxiliary Hamiltonian (a counterdiabatic term) to the original Hamiltonian to cancel out the non-adiabatic transitions.

<u>Digitized counterdiabatic quantum optimization (DCQO):</u>This algorithm aims to find the ground state of a problem Hamiltonian rapidly by making use of counterdiabatic (CD) protocols. This is achieved by adding a CD term to the adiabatic Hamiltonian to speed up the evolution of the quantum system, meanwhile suppressing any transitions between the instantaneous eigenstates. However, this often incurs large circuit depth since the quantum gates need to be decomposed into more elementary gates implementable by the hardware.

DCQO is a purely digital approach to solve optimization problems rapidly. But it incurs large circuit depth since the quantum gates need to be decomposed into more elementary gates implementable by the hardware. This prevents solving industry use case problems in the current NISQ devices.

A proposed solution is to perform CD optimization in the framework of DAQC. However, DAQC has not yet been designed to adapt to a specific hardware based on their specific analog blocks to solve a particular problem of interest because to achieve this, it requires to achieve an optimal configuration of digital and analog blocks available in the given hardware.

This invention relates to a method to perform CD optimization in the framework of DAQC algorithm in the ion trap quantum computers. Therefore, the method of the invention may be referred to as digital-analog counterdiabatic quantum optimization (DACQO).

The object of the invention is to provide a hardware specific solution for trapped ion quantum computers to solve an optimization problem.

This object is achieved, for example, by the features of the independent claims in the appended claims. Further embodiments and examples are apparent from the dependent claims, the detailed description, and the accompanying drawings of the figures.

In a first aspect, the invention pertains to a computer-implemented method for solving an optimization problem with a trapped ion quantum computer using digital-analog counterdiabatic quantum optimization.

The method comprises by using a central processing unit (CPU):

- providing a problem Hamiltonian being defined based on the multi-qubit system and indicative of at least one first pair of interconnected qubits in the multi-qubit system, the problem Hamiltonian being defined based on the DAQC operation encodes the optimization problem and is indicative of at least one second pair of interconnected qubits in the multi-qubit system;

- based on the problem Hamiltonian, selecting a set of analog and digital blocks from the trapped ion quantum computer,

- designing a quantum circuit using the set of analog and digital blocks,

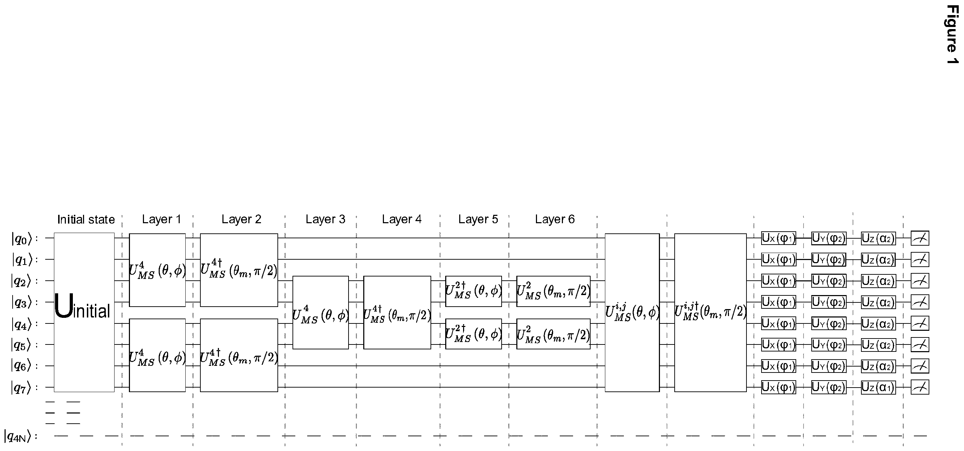

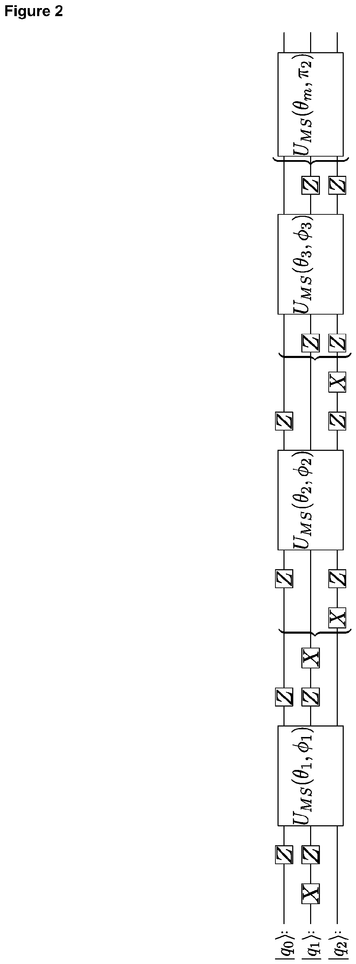

- obtaining an optimal set of digital and analog operations to construct an algorithm and using the algorithm to optimize a cost function encoded in the problem (target) Hamiltonian, (in particular, obtaining an optimal set of digital and analog operations by following steps 1 to 5 of Algorithm 1 and points 1 to 7 described in Example 1 for a homogeneous problem (see Fig. 1) and complement it with the Example 2 (see Fig. 2) for a non-homogeneous problem and use the algorithm to optimize a cost function encoded in the problem (target) Hamiltonian,) and

providing an optimal quantum circuit from the the central processing unit (CPU) to a quantum processing unit (QPU) of the trapped ion quantum computer, (in particular, providing an optimal quantum circuit by following the steps 1 to 5 of the algorithm 1 and points 1 to 7 described in Example 1 for a Homogeneous Hamiltonian (see Fig. 1) and following Example 2 for a Non-Homogeneous problem (see Fig. 2) to the optimal set of digital and analog operations to optimize a cost function encoded in the problem Hamiltonian is used to provide the optimal quantum circuit), and

obtaining the solution to the optimization problem by measuring the ground state of the target (final) Hamiltonian in the quantum processing unit (QPU) of the trapped ion quantum computer.

In certain embodiments of the method of the invention, the problem Hamiltonian is an Ising spin glass Hamiltonian which encodes the solution to a QUBO or HUBO problem, in particular wherein the QUBO or HUBO problem comprises homogeneous (equal) and/or inhomogeneous (unequal) coefficients.

In certain embodiments of the method of the invention, the total Hamiltonian consists of an adiabatic Hamiltonian and a counterdiabatic (CD) Hamiltonian and the adiabatic Hamiltonian consists of an initial Hamiltonian and a target Hamiltonian.

In certain embodiments of the method of the invention, analog blocks from the set of analog and digital blocks are parametrized entangling unitary evolution with more than one parameter and a digital block is a fixed unitary evolution up to a set of local rotations up to 2-qubits.

In certain embodiments of the method of the invention, the analog blocks are global Molmer Sorenson gates, and wherein the digital blocks are 2-qubit $\sigma^x\sigma^x$ gates or single qubit gates.

In certain embodiments of the invention, the method comprises counterdiabatic driving of the problem Hamiltonian.

In certain embodiments of the method of the invention, the multi-qubit system has $n$ qubits, and uses $k$ ($k \leq n$) qubit analog blocks wherein n is an integer with $n \geq 2$.

In certain embodiments, the trapped ion quantum computer allows implementing analog blocks on a non-nearest configuration of ions.

In certain embodiments of the method of the invention, the selection of the set of analog and digital blocks from the trapped ion quantum computer comprises the steps of 3 to 5 of the Algorithm 1, namely:

Step 3: Realizing the k-local (k>1) terms of the Hamiltonian using global MS gates (analog block) in trapped ions.
Step 4: Realizing the 1-local terms using the single qubit rotations in trapped ions.
Step 5: Obtaining a circuit with an optimal configuration of analog and digital blocks.

In certain embodiments of the method of the invention, designing the quantum circuit using the set of analog and digital blocks based on the problem Hamiltonian comprises the steps of 1 to 5 of the algorithm 1 and points 1 to 7 of the Example 1 for Homogeneous case (Fig. 1) and following Example 2 for Non-Homogeneous case (Fig.2).

In certain embodiments of the method of the invention, the optimal set of digital and analog operations to optimize the cost function encoded in the problem Hamiltonian is obtained by following the points 1 to 7 of the Example 1 for Homogeneous case (Fig. 1) and following Example 2 for Non-Homogeneous case (Fig.2).

In certain embodiments of the method of the invention, the optimal quantum circuit is obtained by following the points 1 to 7 of the Example 1 for a homogeneous case (Fig. 1) and following Example 2 for a non-homogeneous case (Fig.2).

In certain embodiments of the method of the invention, the set of operating parameters of the at least one analog block comprises rotation angles as an adjustable parameter.

In certain embodiments of the method of the invention, the solution to the optimization problem is encoded in the ground state of the Ising spin glass Hamiltonian. In certain embodiments of the method of the invention, the ground state of the Ising spin glass Hamiltonian is found using counterdiabatic techniques of optimization.

In certain embodiments of the method of the invention, each qubit in the intermediate quantum circuit is initialized, in particular in the $|0\rangle$ state or another predefined state suitable for the given problem, generating an easy to prepare initial state for the CD driving.

In a first aspect, the invention pertains to a data processing apparatus (or device or system) comprising means for carrying out the method described herein.

In a second aspect, the invention pertains to a computer program [product] comprising a computer-readable storage medium, wherein the computer-readable storage medium stores a computer code which, when executed by at least one central processing unit (CPU) causes the CPU to perform the method described herein.

In a third aspect, the invention pertains to a computer program [product] comprising instructions which, when the program is executed by a computer, cause the computer to carry out the method described herein.

In a fourth aspect, the invention pertains to the use of CD optimization algorithm to solve an optimization problem in trapped ion quantum computers by making us of a hardware specific digital-analog approach.

Other features and advantages of the invention will be apparent upon reading the detailed description and reviewing the accompanying drawings of the figures.

**Detailed Description of the Invention**

Various embodiments of the invention are further described in more detail with reference to the accompanying drawings. However, the invention may be embodied in many other forms and should not be constructed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

The implementation of native operations on a quantum computer allows for more faithful execution of complex circuits. DAQC enables analog blocks provided by quantum hardware types such as trapped ions, superconducting circuits, neutral atoms, photonics, spin qubits, etc. to be combined with digital blocks. However, due to the limited hardware specifications and targeted problem, an optimal configuration of the digital and analog blocks is necessary to solve the problem.

The present invention pertains to an algorithm capable of achieving the ground state solutions for QUBO of HUBO problems of arbitrary size using DAQC which involves less circuit depth quantum circuits as compared to purely digital methods.

A certain embodiment of the method of the invention (algorithm) is summarized in the steps given below (Algorithm 1).

Step 1: In general, the method of the invention can be used for solving a QUBO or HUBO problem.

Step 2: Encoding the solution of the optimization problem in the ground state of a many-body Hamiltonian.

Step 3: Realizing the k-local (k>1) terms of the Hamiltonian using global MS gates (analog block) in trapped ions.

Step 4: Realizing the 1-local terms using the single qubit rotations in trapped ions.

Step 5: Obtaining a circuit with an optimal configuration of analog and digital blocks.

Step 6: Using a CD optimization to find the ground state of the many-body Hamiltonian.

Step 7: Using trotterization for the time evolution of the system to implement quantum gate-based optimization in trapped ion quantum computer.

Step 8: To achieve Step 6, in certain embodiments, one starts with a n-qubit quantum circuit and a selected multi-qubit analog block (global MS gate), where each qubit is initialized in either the $|0\rangle$ state or some predefined state suitable for the problem to be solved.

For the trapped ion quantum computers, using the global n-qubit MS gate, one can achieve the optimal circuit configuration for the DACQO algorithm.

**Figures**

**Figure 1:** Quantum circuit to solve an homogeneous QUBO or HUBO problem using CD optimization. Analog blocks are global MS gates, $U_{MS}^k(\theta, \phi)$ and digital blocks are $U_{MS}^2\left(\theta, \frac{\pi}{2}\right)$ and single qubit gates. The same structure is extendable to $n$ qubits with any $k$ qubit analog block according to the steps 1-8 and the algorithm shown in Example 1.

**Figure 2:** Example of a 3-qubit quantum circuit to solve an inhomogeneous QUBO or HUBO problem with 3 qubit analog blocks according to certain embodiments of the present invention.

**Figure 3:** Scaling (circuit depth) as a function of the system size (number of qubits) for all cases.

**Examples**

QUBO problem

The method of the invention in certain embodiments was applied to a known optimization problem, namely the QUBO problem. QUBO problems involve finding binary values (0 or 1) for a set of variables to minimize a quadratic objective function. This can be defined as follows:

$$minimize: f(x) = \sum_{i,j} Q_{i,j} x_i x_j \qquad (4)$$

where $x$ represents a vector of binary variables, with $x_i$ taking binary values (0 or 1) for each variable and $Q_{i,j}$ represents the coefficients of the quadratic terms that define the objective function. Solving QUBO problems is computationally challenging, particularly for large problem instances. The QUBO problem can be mapped to the Ising Hamiltonian of the form

$$H_{Ising} = \sum_{i,j} J_{i,j} \sigma_i^z \sigma_j^z + \sum_i h_i \sigma_i^z \qquad (5)$$

which encodes the solution in its ground state.

To find the ground state of Equation (5), a CD technique is used which aims to provide rapid solutions to optimization problems by supplementing adiabatic driving (adiabatic quantum computing) by counterdiabatic terms. This is achieved by adding a CD term to the adiabatic Hamiltonian as

$$H(\lambda) = H_{ad}(\lambda) + f(\lambda)H_{cd}(\lambda) \qquad (6)$$

where $(\lambda(t) \in [0,1])$ is a scheduling function that represents the interpolation from the initial Hamiltonian to the final Hamiltonian. The adiabatic time dependent Hamiltonian comprises the initial and final (target) Hamiltonian as the transverse field and the Ising spin glass, respectively, given by

$$H_{ad}(\lambda) = \left(1 - \lambda(t)\right)H_i + \lambda(t)H_f \qquad (7)$$

Where $H_i = \sum_i \sigma_i^x$ and $H_f = H_{Ising}$ and the CD Hamiltonian is

$$H_{cd}^1(\lambda) = 2\dot{\lambda}\alpha_1(t)\sum_i h_i\sigma_i^y + 2\dot{\lambda}\alpha_1(t)\sum_{i<j} J_{ij}\left(\sigma_i^y \sigma_j^z + \sigma_i^z \sigma_j^y\right) \qquad (8)$$

For the implementation, a native analog-block (MS gate) is used from trapped-ion quantum systems, given by

$$U_{MS}^n(\theta, \phi) = e^{-i\frac{\theta}{4}(cos\phi\, S_x + sin\phi\, S_y)^2} \qquad (9)$$

where $S_x, S_y = \sum_{i=1}^n \sigma_{x,y}^i$ are a summation over the Pauli X and Y operators. The analog blocks can be applied to only nearest neighbor subset of qubits and the angles $\theta, \phi$ of each block is chosen according to the target Hamiltonian.

Example 1: Homogeneous (equal coefficients, $J_{ij} = J$, $h_{ij} = h$) Hamiltonian

In certain embodiments of the method of the invention, digital and analog blocks are applied to realize a homogeneous Ising spin glass Hamiltonian whose ground state can be found by a CD optimization. After a basis transformation, the full Hamiltonian can be written as

$$H' = \left(1 - \lambda(t)\right)\sum_i \sigma_i^z + \lambda(t)J\sum_{i,j}\sigma_i^x\sigma_j^x + \lambda(t)h\sum_i\sigma_i^x + 2\dot{\lambda}\alpha_1(t)h\sum_i\sigma_i^y +$$

$$2\dot{\lambda}\alpha_1(t)J\sum_{i<j}(\sigma_i^y\sigma_j^x + \sigma_i^x\sigma_j^y) \qquad (10)$$

In this Hamiltonian, the local terms can be realized by digital gates and the 2-local terms using analog block, Equation (9). The quantum algorithm in the form of *n* qubit quantum circuit using *k* (integer) qubit analog blocks (*n* > *k* and *n* is a multiple of *k*) can be designed as follows:

1. Layer 1: Entangle each *k* (integer) set of nearest neighbor ions using k-qubit MS gates $U_{MS}^k(\theta, \phi) = e^{-i\frac{\theta}{4}(\cos\phi\, S_x + \sin\phi\, S_y)^2}$ . *n* number of qubits will require *n/k* (*n* > *k* and *n* is a multiple of *k*) number of MS gates.

2. Layer 2: Eliminate parasitic $\sigma_i^y\sigma_j^y$ terms due to MS gates applied in the previous layer using $U_{MS}^{k\dagger}\left(\theta\sin^2\phi, \frac{\pi}{2}\right)$ . *n* number of qubits will require *n/k* number of these gates.

3. Layer 3: Entangle as many leftovers as possible nearest neighbor *k* ions. The gate count scales as $\frac{n}{k} - 1$ .

4. Layer 4: Eliminate parasitic $\sigma_i^y\sigma_j^y$ terms due to the previous layer of MS gate using $U_{MS}^{k\dagger}\left(\theta\sin^2\phi, \frac{\pi}{2}\right)$ as in step 2. The gate count scales as $\frac{n}{k} - 1$ .

5. Layer 5: Eliminate the extra terms originating due to overlapping MS gates using 2-qubit MS gates. The gate count scales as the number of MS gates in the second layer giving an estimate of $\frac{n}{k}$ .

6. Eliminate parasitic $\sigma_i^y\sigma_j^y$ terms due to the previous layer of MS gate using two-qubit MS, $U_{MS}^{2\dagger}\left(\theta\sin^2\phi, \frac{\pi}{2}\right)$ . The gate count scales as $\frac{n}{k} - 1$ .

7. Finally, to entangle remaining pairs of ions, the 2-qubit MS gates are used. To estimate this, one can see that for *n* = 1, there are 0 pairs, for *n* = 2, there are 10 pairs, this will scale as *n* - *k* + *n* - (*k* - 1) + .... + *n* - *n* + 1 = (*n* - *k*){*n* - (*k* - 1)}/2. But, as one needs an equal number of counter MS gates $U_{MS}^{2\dagger}\left(\theta\sin^2\phi, \frac{\pi}{2}\right)$ , the total number would be = (*n* - *k*){*n* - (*k* - 1)}. In this step *n*/2 number of gates can be done simultaneously, giving the number of layers as 2(*n* - *k*)(*n* - *k* + 1)/*n*.

The corresponding quantum circuit for a 8 qubit example is shown in Fig. 1. For n-qubit system, the circuit depth of the algorithm is 6 + 2(*n* - *k*)(*n* - *k* + 1)/*n*. For a fully digital simulation the circuit depth scales as 3(*n* - 1). For example, for a 8 qubit system and 4 qubit MS gate as analog block the depth using DAQC will be 9 compared to Digital which is 21. The circuit depth scaling in time units for a *n*-qubit system is shown in Fig. 2.

Example 2: Non-homogeneous Hamiltonian

In certain embodiments of the method of the invention, non-homogeneous Hamiltonians can be realized by introducing non-homogeneity using local rotations. As a simple example for a 3-qubit Hamiltonian realized using 3-qubit MS gates and local unitaries, it can be made non-homogeneous according to the Figure. 2. The result of applying local rotations to the 3-qubit MS gate is to generate the following transformation

$$U = \sigma_2^x \sigma_1^z \sigma_2^z U_{MS}^3(\theta_1, \phi_1)\sigma_1^z \sigma_2^z \sigma_2^x \cdot \sigma_3^x \sigma_1^z \sigma_3^z U_{MS}^3(\theta_2, \phi_2)\sigma_1^z \sigma_3^z \cdot \sigma_2^z \sigma_3^z U_{MS}^3(\theta_3, \phi_3)\sigma_2^z \sigma_3^z \qquad (11)$$

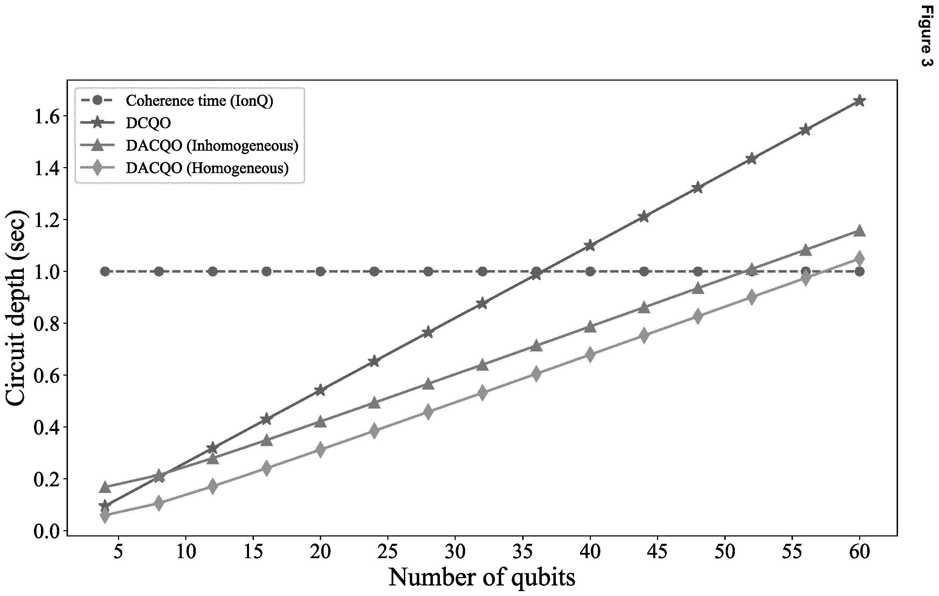

This creates inhomogeneity in the Hamiltonian and requires solving 12 equations to get the parameters $\theta_i, \phi_i$. In general, for a $k$ - qubit analog block, one needs ($k(k$ - 1)/2) gates and ($4k(k$ - 1)/2) number of equations to get the parameters. Therefore, it is also more reasonable to work with a smaller sized analog block. Furthermore, the circuit depth can be evaluated by $\frac{k(k-1)}{2} + 2\frac{(n-k)(n-k+1)}{n}$ Which means that each 4-qubit analog block in the Fig. 1 for the homogeneous case is replaced by $\frac{k(k-1)}{2}$ number of gates. The scaling of the algorithm using 4-qubit analog blocks is shown for both the Homogeneous and the Inhomogeneous cases as in Fig. 3. It shows that the DACQO algorithm outperforms the purely digital simulation in both homogeneous and inhomogeneous cases. This is because the circuit depth plotted against the number of qubits scales less for the DACQO in general and can be used to solve a larger problem in the same device (trapped ions) with the given coherence time.

**Claims**

1. A computer-implemented method for solving an optimization problem in a trapped ion quantum computer in a multi-qubit system, comprising:

   by using a central processing unit (CPU) of a classical computer:

   - providing a problem Hamiltonian that is defined based on the multi-qubit system and indicative of at least one first pair of interconnected qubits in the multi-qubit system, wherein the problem Hamiltonian encodes the optimization problem and is indicative of an at least one second pair of interconnected qubits in the multi-qubit system,
   - based on the problem Hamiltonian, selecting a set of analog and digital blocks from the trapped ion quantum computer,
   - designing a quantum circuit using the set of analog and digital blocks,
   - obtaining an optimal set of digital and analog operations to construct an algorithm and using the algorithm to optimize a cost function encoded in the problem (target) Hamiltonian, and

   providing an optimal quantum circuit to a quantum processing unit (QPU) of the trapped ion quantum computer, and the optimal set of digital and analog operations to optimize a cost function encoded in the problem Hamiltonian is used to provide the optimal quantum circuit, and
   obtaining the solution to the optimization problem by measuring the ground state of the target (final) Hamiltonian in the quantum processing unit (QPU) of the trapped ion quantum computer.

2. Method of claim 1, wherein the problem Hamiltonian is an Ising spin glass Hamiltonian which encodes the solution to a QUBO or HUBO problem, in particular wherein the QUBO or HUBO problem comprises homogeneous (equal) and/or inhomogeneous (unequal) coefficients.

3. Method of claim 1 or 2, wherein the total Hamiltonian consists of an adiabatic Hamiltonian and a counterdiabatic (CD) Hamiltonian and the adiabatic Hamiltonian consists of an initial Hamiltonian and a target Hamiltonian.

4. Method of any of claims 1 to 3, wherein analog blocks from the set of analog and digital blocks are parametrized entangling unitary evolution with more than one parameter and a digital block is a fixed unitary evolution up to a set of local rotations up to 2-qubits.

**5.** Method of any of claims 1 to 4, wherein the analog blocks are global Molmer Sorenson gates, and wherein the digital blocks are 2-qubit $\sigma^x \sigma^x$ gates or single qubit gates.

**6.** Method of claim 1 to 5, comprising counterdiabatic driving of the problem Hamiltonian.

**7.** Method of any of claims 1 to 6, wherein the multi-qubit system has $n$ qubits, and uses $k$ ($k \leq n$) qubit analog blocks wherein in is an integer with $n \geq 2$.

**8.** Method of any of claims 1 to 7, wherein the trapped ion quantum computer allows implementing analog blocks on a non-nearest configuration of ions.

**9.** A computer program (product) comprising a computer-readable storage medium, wherein the computer-readable storage medium stores a computer code which, when executed by at least one central processing unit (CPU) causes the CPU to perform the method according to any one of claims 1 to 8.

**10.** A computer program (product) comprising instructions which, when the program is executed by a computer, cause the computer to carry out the method of any one of claims 1 to 8.

**11.** A computer program (product) comprising a computer-readable storage medium, wherein the computer-readable storage medium stores a computer code which, when executed by at least one central processing unit (CPU), causes the CPU to perform the method any one of claims 1 to 8.

**Figure 1**

**Figure 2**

**Figure 3**

Europäisches
Patentamt

European
Patent Office

Office européen
des brevets

# EUROPEAN SEARCH REPORT

**Application Number**

EP 24 15 8568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/028281 A1 (KIPU QUANTUM GMBH [DE]) 8 February 2024 (2024-02-08) * the whole document * | 1-11 | INV. G06N10/20 G06N10/40 G06N10/60 |
| X | TADASHI KADOWAKI: "Enhancing Quantum Annealing in Digital-Analog Quantum Computing", ARXIV.ORG, CORNELL UNIVERSITY LIBRARY, 201 OLIN LIBRARY CORNELL UNIVERSITY ITHACA, NY 14853, 3 June 2023 (2023-06-03), XP091529321, * the whole document * * * | 1-11 | |
| A | DAVID HEADLEY ET AL: "Approximating the Quantum Approximate Optimisation Algorithm", ARXIV.ORG, CORNELL UNIVERSITY LIBRARY, 201 OLIN LIBRARY CORNELL UNIVERSITY ITHACA, NY 14853, 19 May 2020 (2020-05-19), XP091359980, DOI: 10.1103/PHYSREVA.106.042446 * Abstract, I. Introduction, II. The digital-analog quantum computational paradigm, III. The quantum approximate optimization algorithm, IV. Digital analog QAOA * | 1-11 | **TECHNICAL FIELDS SEARCHED (IPC)** G06N |

-/--

The present search report has been drawn up for all claims

| Place of search | Date of completion of the search | Examiner |
|---|---|---|
| The Hague | 2 August 2024 | Moro Pérez, Gonzalo |

EPO FORM 1503 03.82 (P04C01)

page 1 of 3

Europäisches
Patentamt

European
Patent Office

Office européen
des brevets

## EUROPEAN SEARCH REPORT

**Application Number**

EP 24 15 8568

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEGADE N. N. ET AL: "Portfolio optimization with digitized counterdiabatic quantum algorithms", PHYSICAL REVIEW RESEARCH, vol. 4, no. 4, 16 December 2021 (2021-12-16), XP093139613, College Park, US ISSN: 2643-1564, DOI: 10.1103/PhysRevResearch.4.043204 * Abstract, I. Introduction, V. Conclusion * | 1-11 | |
| A | CHANDARANA PRANAV ET AL: "Digitized Counterdiabatic Quantum Algorithm for Protein Folding", PHYSICAL REVIEW APPLIED, vol. 20, no. 1, 27 December 2022 (2022-12-27), XP093176360, US ISSN: 2331-7019, DOI: 10.1103/PhysRevApplied.20.014024 * Abstract, Introduction, Discussions * | 1-11 | TECHNICAL FIELDS SEARCHED (IPC) |
| A | ADRIAN PARRA-RODRIGUEZ ET AL: "Digital-Analog Quantum Computation", ARXIV.ORG, CORNELL UNIVERSITY LIBRARY, 201 OLIN LIBRARY CORNELL UNIVERSITY ITHACA, NY 14853, 16 July 2020 (2020-07-16), XP081702413, DOI: 10.1103/PHYSREVA.101.022305 * Abstract, II. Analog, digital and digital-analog quantum computing, III. Digital-analog quantum computation, IV. Stepwise and banged DAQC * | 1-11 | |

-/--

The present search report has been drawn up for all claims

| Place of search | Date of completion of the search | Examiner |
|---|---|---|
| The Hague | 2 August 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 15 8568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEGADE NARENDRA N. ET AL: "Shortcuts to Adiabaticity in Digitized Adiabatic Quantum Computing", PHYSICAL REVIEW APPLIED, vol. 15, no. 2, 9 September 2020 (2020-09-09), XP093139605, US ISSN: 2331-7019, DOI: 10.1103/PhysRevApplied.15.024038 * Abstract, II. Single spin system, III. Local counter-diabatic driving, IV. Approximate counter-diabatic driving * | 1-11 | |
| T | Kumar Shubham ET AL: "Digital-Analog Counterdiabatic Quantum Optimization with Trapped Ions", arXiv.org, 20 May 2024 (2024-05-20), pages 1-12, XP093190505, DOI: 10.48550/arxiv.2405.01447 Retrieved from the Internet: URL:https://arxiv.org/pdf/2405.01447 [retrieved on 2024-07-29] * the whole document * | 1-11 | TECHNICAL FIELDS SEARCHED (IPC) |

The present search report has been drawn up for all claims

| Place of search | Date of completion of the search | Examiner |
|---|---|---|
| The Hague | 2 August 2024 | Moro Pérez, Gonzalo |

EPO FORM 1503 03.82 (P04C01)

## ANNEX TO THE EUROPEAN SEARCH REPORT
## ON EUROPEAN PATENT APPLICATION NO.

EP 24 15 8568

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2024

| Patent document cited in search report | Publication date | Patent family member(s) | Publication date |
|---|---|---|---|
| WO 2024028281 A1 | 08-02-2024 | NONE | |

EPO FORM P0459